# EUROPÄISCHE PATENTSCHRIFT

(11) **EP 1 573 278 B1**
(45) Veröffentlichungstag und Bekanntmachung des Hinweises auf die Patenterteilung: **25.05.2016**
(21) Anmeldenummer: 03813885.5
(22) Anmeldetag: 08.12.2003
(51) Int. Cl.: G01F 25/00, G01F 23/284, G01F 23/296

(54) **FÜLLSTANDSMESSGERÄT UND VERFAHREN ZUR FÜLLSTANDSMESSUNG NACH DEM LAUFZEITPRINZIP**
FILLING-LEVEL MEASUREMENT DEVICE AND METHOD FOR MEASURING THE FILLING LEVEL ACCORDING TO THE PROPAGATION TIME PRINCIPLE
APPAREIL DE MESURE DE NIVEAU ET PROCEDE POUR MESURER LE NIVEAU SELON LE PRINCIPE DE TEMPS DE PROPAGATION

(30) Priorität: 20.12.2002 DE 10260962
(43) Veröffentlichungstag der Anmeldung: 14.09.2005
(73) Patentinhaber: Endress + Hauser GmbH + Co. KG, 79689 Maulburg (DE)
(72) Erfinder: BARET, Marc, F-68680 Kembs (FR); JIN, Yong, 79539 Lörrach (DE); SPANKE, Dietmar, 79585 Steinen (DE); SCHMITT, Edgar, 77948 Friesenheim (DE)
(74) Vertreter: Andres, Angelika Maria
(86) Internationale Anmeldenummer: PCT/EP2003/013894
(87) Internationale Veröffentlichungsnummer: WO 2004/059260

(56) Entgegenhaltungen:
- EP-A- 0 644 404
- EP-A1- 0 438 864
- EP-A2- 1 139 075
- DE-A- 3 337 690
- DE-A- 4 223 346
- DE-A- 4 229 079
- US-A- 4 972 386
- US-A- 5 168 469
- US-A- 5 323 361
- US-A1- 2002 129 649

## Beschreibung

Die Erfindung betrifft ein Füllstandsmeßgerät und ein Verfahren zur Füllstandsmessung nach dem Laufzeitprinzip mit berührungslos arbeitenden Füllstandsmeßgeräten.

Derartige berührungslos arbeitende Meßgeräte werden in einer Vielzahl von Industriezweigen eingesetzt, z.B. in der verarbeitenden Industrie, in der Chemie oder in der Lebensmittelindustrie.

Bei der Füllstandsmessung werden periodisch kurze Sendesignale, z.B. Mikrowellen oder Ultraschallwellen, mittels einer Antenne zur Oberfläche eines Füllguts gesendet und deren an der Oberfläche reflektierte Echosignale nach einer abstandsabhängigen Laufzeit wieder empfangen. Es wird eine die Echoamplituden als Funktion der Laufzeit darstellende Echofunktion gebildet. Jeder Wert dieser Echofunktion entspricht der Amplitude eines in einem bestimmten Abstand von der Antenne reflektierten Echos.

Aus der Echofunktion wird ein Nutzecho bestimmt, das wahrscheinlich der Reflexion eines Sendesignals an der Füllgutoberfläche entspricht. Dabei wird in der Regel angenommen, daß das Nutzecho, eine größere Amplitude aufweist, als die übrigen Echos. Aus der Laufzeit des Nutzechos ergibt sich bei einer festen Ausbreitungsgeschwindigkeit der Sendepulse unmittelbar der Abstand zwischen der Füllgutoberfläche und der Antenne.

Üblicherweise wird nicht ein empfangenes Rohsignal zur Auswertung herangezogen, sondern dessen sogenannte Hüllkurve. Die Hüllkurve wird erzeugt, indem das Rohsignal gleichgerichtet und gefiltert wird. Zur genauen Bestimmung einer Laufzeit des Nutzechos wird zuerst ein Maximum der Hüllkurve bestimmt.

Diese herkömmliche Vorgehensweise funktioniert in einer Vielzahl von Anwendungen einwandfrei.

Probleme treten jedoch immer dann auf, wenn das vom Füllstand stammende Echo nicht zweifelsfrei identifiziert werden kann. Dies kann beispielsweise der Fall sein, wenn Einbauten im Behälter vorhanden sind, die die Sendesignale besser Reflektieren, als die Füllgutoberfläche.

In solchen Fällen kann, z.B. bei der Inbetriebnahme, dem Füllstandsmeßgerät einmal der aktuelle Füllstand vorgegeben werden. Das Füllstandsmeßgerät kann anhand des vorgegebenen Füllstandes das zugehörige Echo als Nutzecho identifizieren und z.B. durch einen geeigneten Algorithmus verfolgen. Dabei werden z.B. in jedem Meßzyklus Maxima des Echosignals oder der Echofunktion bestimmt und aufgrund der Kenntnis des im vorangegangenen Meßzyklus ermittelten Füllstandes und einer anwendungs-spezifischen maximal zu erwartenden Änderungsgeschwindigkeit des Füllstandes das Nutzecho ermittelt. Aus einer Signallaufzeit des so ermittelten aktuellen Nutzechos ergibt sich dann der neue Füllstand.

Eine solche Echoverfolgung hat den Nachteil, daß das Nutzecho ohne Unterbrechung verfolgt werden muß. Wenn das Füllstandsmeßgerät, z.B. zu Wartungszwecken, außer Betrieb genommen wird, geht das Nutzecho in der Regel verloren. Das Füllstandsmeßgerät ist dann bei der Wiederinbetriebnahme nicht in der Lage das Nutzecho zuverlässig zu erkennen. Es muß erneut der aktuelle Füllstand vorgegeben werden. Dies kann jedoch unter Umständen einen erheblichen Aufwand bedeuten. Wenn z.B. keine alternativen Meßmethoden zur Verfügung stehen, kann es erforderlich sein, den Behälter komplett zu entleeren oder vollständig oder bis zu einer Referenzmarke zu befüllen. Dies bedeutet in der Industrie häufig eine Unterbrechung eines Herstellprozesses und kann mit erheblichem Zeitaufwand und hohen Kosten verbunden sein.

Aus der EP 1 139 075 A2 sind ein Verfahren und eine Vorrichtung zum Messen eines durch Betriebsverbrauch sich ändernden Füllstandes einer Flüssigkeit in einem Behälter beschrieben. Hierzu wird in bestimmten zeitlichen Abständen ein Abfragesignal in das Behälterinnere gesendet und ein Antwortsignal empfangen und für eine Anzeige ausgewertet. Insbesondere wird das jeweils empfangene Antwortsignal mit in einem Speicher gespeicherten Antwortsignalen verglichen, die bestimmten Füllständen entsprechen. Bei Übereinstimmung wird ein dem Füllstand dieses gespeicherten Antwortsignales entsprechendes Anzeigesignal für die Anzeigevorrichtung gebildet. Bei Nichtübereinstimmung wird ein betriebsabhängiger Flüssigkeitverbrauch errechnet und von dem zuletzt ermittelten Füllstand, bei welchem das empfangene Antwortsignal und das gespeicherte Antwortsignal übereinstimmten, für die entsprechende Anzeige subtrahiert.

Es ist eine Aufgabe der Erfindung, ein nach dem Laufzeitprinzip arbeitendes Füllstandsmeßgerät anzugeben, das bei einer Wiederinbetriebnahme unmittelbar eigenständig und zuverlässig Füllstandsmessungen durchführen kann.

Dies erreicht die Erfindung durch ein Füllstandsmeßgerät (5) zur Messung eines Füllstandes
eines Füllgutes in einem Behälter mit
- mindestens einer Antenne zum Senden von Sendesignalen und zum Empfangen von Echosignalen,
- einer Signalverarbeitung, die dazu dient aus den empfangenen Echosignalen eine Echofunktion abzuleiten, die Amplituden des Echosignals in Abhängigkeit von deren Laufzeit enthält,
- einem Speicher, in dem behälterspezifische Daten in einer Tabelle gespeichert sind,
   - wobei die Spalten der Tabelle mit einem Spaltenindex zur Aufnahme jeweils einer Echofunktion dienen,
   - wobei die Echofunktionen in den Spalten in einer Reihenfolge abgelegt sind, so dass die in der Tabelle in der Spalte mit dem Spaltenindex abgelegte Echofunktion einem bestimmten Füllstand entspricht, und
- einer Auswerteeinheit, die so ausgebildet ist, dass
   - sie zur Bestimmung des aktuellen Füllstandes auf die Tabelle zugreift und die in der Tabelle abgelegte Echofunktionen mit der aktuellen Echofunktion vergleicht, in dem diejenige in der Tabelle abgelegte Echofunktion ermittelt wird, die die größte Übereinstimmung mit der aktuellen Echofunktion aufweist, und der aktuelle Füllstand dem dem Spaltenindex der ermittelten Echofunktion zugeordneten Füllstand gleichgesetzt wird.

Gemäß einer Ausgestaltung sind die Daten im Speicher in komprimierter Form abgelegt.

Weiter besteht die Erfindung in einem Verfahren zur Messung eines Füllstands eines Füllgutes in einem Behälter mit einem
Füllstandsmeßgerät mit
- mindestens einer Antenne, die Sendesignale sendet und Echosignale empfängt,
- einer Signalverarbeitung, die aus den empfangenen Echosignalen eine Echofunktion ableitet, die die Amplituden des Echosignals in Abhängigkeit von deren Laufzeit enthält,
- einem Speicher, in dem behälterspezifische Daten in einer Tabelle gespeichert werden.
   - wobei die Spalten der Tabelle mit einem Spaltenindex zur Aufnahme jeweils einer Echofunktion dienen,
   -- wobei die Echofunktionen in den Spalten in einer Reihenfolge so abgelegt werden, dass die in der Tabelle in der Spalte mit dem Spaltenindex abgelegte Echofunktion einem bestimmten Füllstand entspricht,
   und
- einer Auswerteeinheit, die
   -- zur Bestimmung des aktuellen Füllstandes auf die Tabelle zugreift, die in der Tabelle abgelegte Echofunktionen mit der aktuellen Echofunktion vergleicht, in dem diejenige in der Tabelle abgelegte Echofunktion ermittelt wird, die die größte Übereinstimmung mit der aktuellen Echofunktion aufweist, und die den Füllstand dem dem Spaltenindex der ermittelten Echofunktion zugeordneten Füllstand gleichsetzt.

Gemäß einer vorteilhaften Weiterbildung der Erfindung im Zusammenhang mit der Speicherung von behälterspezifischen Daten in der Tabelle eines Füllstandsmessgeräts ist vorgesehen, dass
- ein an einer Füllgutoberfläche reflektiertes Echo als Füllstandsecho durch einen vorgegebenen Füllstand identifiziert wird,
- dieses Echo über einen Zeitraum verfolgt wird,
- während dieses Zeitraums periodisch Sendesignale ausgesendet werden, deren Echosignale aufgenommen werden und aus den Echosignalen Echofunktionen gebildet werden,
   - die in der Tabelle in einer Spalte mit einem Spaltenindex abgelegt wird, der einem zu diesem Zeitpunkt durch die Verfolgung des Füllstandsechos bestimmten Füllstand entspricht. Weiterhin ist in Verbindung mit der Erfindung im Zusammenhang mit der Speicherung von behälterspezifischen Daten in der Tabelle eines Füllstandsmessgeräts vorgesehen, dass
- ein Sendesignal ausgesendet wird, dessen Echosignal aufgenommen wird und aus dem Echosignal eine Echofunktion abgeleitet wird,
- ein wahrscheinlich von einer Reflektion an der Füllgutoberfläche stammendes Nutzecho bestimmt wird,
- dieses Nutzecho über einen Zeitraum verfolgt wird,
- während dieses Zeitraums periodisch Sendesignale ausgesendet werden, deren Echosignale aufgenommen werden und aus den Echosignalen Echofunktionen bestimmt werden,
- die in der Tabelle in einer Spalte unter einem Spaltenindex abgelegt werden, der einem zu diesem Zeitpunkt durch die Verfolgung des Nutzechos bestimmten Füllstand entspricht.

Gemäß einer Weiterbildung des letztgenannten Verfahrens wird eine Plausibilitätsbetrachtung der Tabelle vorgenommen, deren Ergebnis das Nutzecho als an der Füllgutoberfläche reflektiertes Echo bestätigt oder widerlegt.

Gemäß einer Weiterbildung der letztgenannten Weiterbildung wird mittels der Tabelle der momentane Füllstand gefunden, wenn die Plausibilitätsbetrachtung ergibt, daß das Nutzecho nicht von einer Reflektion an der Füllgutoberfläche stammt, und das gesamte Verfahren wird wiederholt, wobei als Nutzecho, dasjenige Echo ausgewählt wird, das dem mittels der Tabelle bestimmten momentanen Füllstand entspricht.

Gemäß einer Weiterbildung des letztgenannten Verfahrens werden bei der Plausibilitätsbetrachtung in der Tabelle Höhenlinien erkannt, die einer Veränderung einer Laufzeit dieses Echos in Abhängigkeit vom Füllstand enstprechen. Es wird überprüft, ob ein Höhenlinienabschnitt vorliegt, in dem die Laufzeiten mit ansteigendem Füllstand abfallen und in dem die Laufzeiten in einer Spalte geringer sind, als die Laufzeit des Nutzechos in der selben Spalte. Liegt ein solcher Höhenlinienabschnitt vor, wird das Nutzecho als an der Füllgutoberfläche reflektiertes Echo widerlegt, liegt ein solcher Höhenlinienabschnitt nicht vor, wird das Nutzecho als an der Füllgutoberfläche reflektiertes Echo akzeptiert.

Gemäß einer Weiterbildung wird
- mittels der Tabelle der momentane Füllstand gefunden, wenn die Plausibilitätsbetrachtung ergibt, daß das Nutzecho nicht von einer Reflektion an der Füllgutoberfläche stammt, und
- das gesamte Verfahren wird wiederholt,
- wobei als Nutzecho dasjenige Echo ausgewählt wird, das dem mittels der Tabelle bestimmten momentanen Füllstand entspricht.

Darüber hinaus wird gemäß einer Weiterbildung des erfindungsgemäßen Verfahrens vorgschlagen, dass
- ein Sendesignal ausgesendet wird,
- dessen Echosignal aufgenommen wird,
- aus dem Echosignal mehrere Echos ausgewählt werden,
- eins dieser Echos als wahrscheinlich von einer Reflektion an der Füllgutoberfläche stammendes Nutzecho bestimmt wird,
- während des Zeitraums periodisch Sendesignale ausgesendet werden, deren Echosignale aufgenommen werden, und
- für jedes Echosignal die Laufzeit der ausgewählten Echos ermittelt wird und
- für jedes Echosignal der dem Nutzecho zuzuordnende wahrscheinliche Füllstand bestimmt wird,
- die diesem wahrscheinlichen Füllstand entsprechende Spalte ermittelt wird, und
- in dieser Spalte für jedes der ausgewählten Echos in einer der Laufzeit des jeweiligen Echos entsprechenden Zeile ein Wert abgelegt wird.

Darüber hinaus wird angeregt, dass
- ein Sendesignal ausgesendet wird, dessen Echosignal aufgenommen wird,
- aus dem Echosignal mehrere Echos ausgewählt werden,
- eins dieser Echos als wahrscheinlich von einer Reflektion an der Füllgutoberfläche stammendes Nutzecho bestimmt wird,
- während des Zeitraums periodisch Sendesignale ausgesendet werden, deren Echosignale aufgenommen werden, und
- für jedes Echosignal die Laufzeit der ausgewählten Echos ermittelt wird und
- für jedes Echosignal der dem Nutzecho zuzuordnende wahrscheinliche Füllstand bestimmt wird,
- die diesem wahrscheinlichen Füllstand entsprechende Spalte ermittelt wird, und
- in dieser Spalte für jedes der ausgewählten Echos in einer dem jeweiligen Echo entsprechenden Zeile ein Wert abgelegt wird.

Gemäß einer Weiterbildung des letztgenannten Verfahrens wird eine Plausibilitätsbetrachtung der Tabelle vorgenommen, deren Ergebnis das Nutzecho als an der Füllgutoberfläche reflektiertes Echo bestätigt oder widerlegt.

Gemäß einer Weiterbildung der zuvor genannten Verfahren zur Speicherung von behälterspezifischen Daten in der Tabelle eines erfindungsgemäßen Füllstandsmeßgeräts werden in der Tabelle fehlende Daten durch Extrapolation ermittelt und in der Tabelle abgelegt.

Die Erfindung und weitere Vorteile werden nun anhand der Figuren der Zeichnung, in denen ein Ausführungsbeispiel dargestellt ist, näher erläutert; gleiche Elemente sind in den Figuren mit gleichen Bezugszeichen versehen.
- Fig. 1: zeigt eine Anordnung zur Füllstandsmessung mit einem nach dem Laufzeitprinzip arbeitenden Füllstandsmeßgerät;
- Fig. 2: zeigt ein Echosignal E;
- Fig. 3: zeigt die Spalten der Tabelle, wobei in jeder Spalte zur Veranschaulichung die dort einzutragende Echofunktion graphisch dargestellt ist;
- Fig. 4: zeigt ein Diagramm, in dem die Höhenlinien der Tabelle dargestellt sind, für den Fall, daß das tatsächlich an der Füllgutoberfläche reflektierte Echo als Nutzecho eingesetzt wurde;
- Fig. 5: zeigt ein Diagramm, in dem die Höhenlinien der Tabelle dargestellt sind, für den Fall, daß das am Störer reflektierte Echo als Nutzecho eingesetzt wurde;
- Fig. 6: zeigt eine Übersicht über die verfolgten Echos der Füllgutoberfläche, des Störers und des Bodens; und
- Fig. 7: zeigt ein Diagramm, in dem die Höhenlinien der Tabelle dargestellt sind, für den Fall, daß das am Boden reflektierte Echo als Nutzecho eingesetzt wurde.

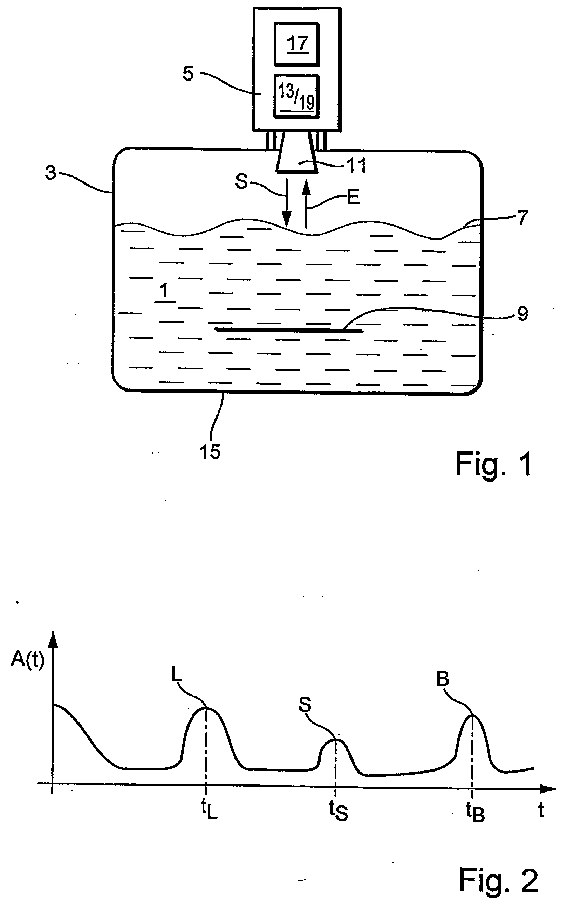

Fig. 1 zeigt eine Anordung zur Füllstandsmessung. Es ist ein mit einem Füllgut 1 gefüllter Behälter 3 dargestellt. Auf dem Behälter 3 ist ein nach dem Laufzeitprinzip arbeitendes Füllstandsmeßgerät 5 angeordnet. Als Füllstandsmeßgerät 5 eignet sich z.B. ein mit Mikrowellen arbeitendes Füllstandsmeßgerät oder ein mit Ultraschall arbeitendes Füllstandsmeßgerät. Das Füllstandsmeßgerät 5 dient dazu, einen Füllstand 7 des Füllguts 1 im Behälter zu messen. In dem Behälter 3 ist exemplarisch ein Störer 9 eingezeichnet. Störer 9 sind z.B. Einbauten im Behälter 3, Rührwerke und natürlich jede andere Struktur, an der Reflektionen auftreten können. Das hier nur ein einziger Störer 9 vorgesehen ist, dient dem leichteren Verständnis und der Übersichtlichkeit. Selbstverständlich können in realen Meßsituationen sehr viel mehr Störer vorhanden sein.

Das Füllstandsmeßgerät 5 weist mindestens eine Antenne 11 zum Senden von Sendesignalen S und zum Empfangen von Echosignalen E auf. In dem dargestellten Ausführungsbeispiel ist eine einzige Antenne 11 vorgesehen, die sowohl sendet als auch empfängt. Alternativ können aber auch eine Antenne zum Senden und mindestens eine weitere Antenne zum Empfangen vorgesehen sein.

Die Sendesignale S werden in Richtung des Füllguts 1 gesendet und an einer Füllgutoberfläche, aber auch am Behälter 3 und an im Behälter 3 befindlichen Störern 9 reflekiert. Die Überlagerung dieser Reflektionen bildet das Echosignal E.

Bei der Füllstandsmessung nach dem Laufzeitprinzip werden periodisch Sendesignale S, z.B. kurze Mikrowellen- oder Ultraschallpulse, in Richtung eines Füllgutes 1 ausgesendet. Es werden deren Echosignale E der Sendepulse S aufgenommen und einer Signalverarbeitung 13 zugeführt, die dazu dient aus den empfangenen Echosignalen E eine Echofunktion abzuleiten, die Amplituden A des Echosignals E in Abhängigkeit von deren Laufzeit t enthält.

In Fig. 2 ist ein Beispiel einer solchen Echofunktion für die Anordnung von Fig. 1 dargestellt. Die Echofunktion weist drei ausgeprägte Maxima auf. Diese Maxima sind Echos L, S, B von denen das Echo L auf eine Reflektion an der Füllgutoberfläche, das Echo S auf eine Reflektion an dem Störer 9 und das Echo B auf eine Reflektion an einem Boden 15 des Behälters 3 zurückzuführen sind. Die Echos L, S, B treten nach Laufzeiten tL, tS, tB auf, die einer Entfernung zwischen der Antenne 11 und der Füllgutoberfläche, bzw. dem Störer 9 und dem Boden 15 entsprechen.

Das Füllstandsmeßgerät 5 weist einen Speicher 17 auf, der dazu dient, behälterspezifische Daten abzuspeichern.

Diese behälterspezifischen Daten werden bei einer Erstinbetriebnahme der Anordung aufgezeichnet und permanent gespeichert. Sie werden auch bei einem Abschalten des Füllstandsmeßgeräts 5 oder einer Unterbrechung von dessen Stromversorgung nicht gelöscht.

Die behälterspezifischen Daten werden in einer Tabelle abgespeichert, deren Spalten 1 bis n zur Aufnahme jeweils einer Echofunktion dienen. Dabei sind die Echofunktionen in den Spalten in einer Reihenfolge abgelegt, die den den jeweiligen Echofunktionen zugehörigen Füllständen entspricht. Äquivalent zu den zugehörigen Füllstanden sind natürlich die zugehörigen Laufzeiten tL der an der Füllgutoberfläche reflektierten Echos L und genauso die zugehörigen Entfernungen zwischen Antenne 11 und Füllgutoberfläche. Diese Größen sind direkt proportional zueinandem und können durch einfache Umrechnung mittels einer bekannten Signalausbreitungsgeschwindigkeit ineinander überführt werden.

In Fig, 3 sind in Spalten 1 bis n Echofunktionen in der Reihenfolge dargestellt, in der sie auch in der Tabelle anzuordnen sind. In der Tabelle entspricht dabei jede Zeile einer Spalte einer Laufzeit.

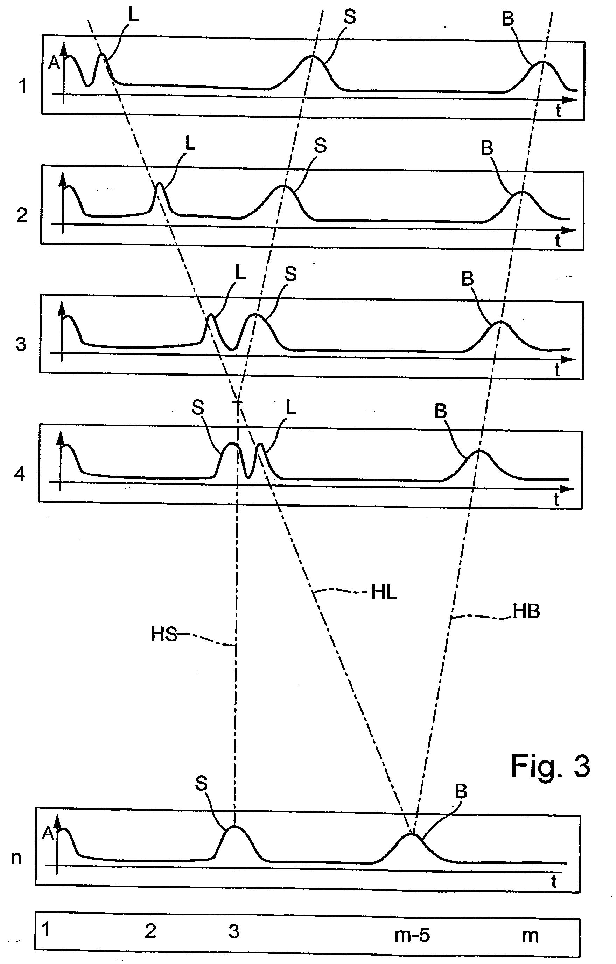

Zur Veranschaulichung ist am unteren Rand von Fig. 3 eine zusätzliche Spalte eingefügt, in der ein Zeilenindex für jede Zeile 1 bis m eingetragen ist. In dem dargestellten Ausführungsbeispiel steigt der Zeilenindex mit der Laufzeit t an. Alternativ könnte der Zeilenindex mit der Laufzeit abfallen. Äquivalent zur Laufzeit ist analog zu dem zuvor für die Spalten erläuterten eine der Laufzeit entsprechende Entfernung.

In der ersten Spalte 1 der Tabelle ist eine Echofunktion einzutragen, wie sie bei voll gefülltem Behälter 3 entsteht. In Fig. 3 ist diese Echofunktion unter Spalte 1 als Funktion abgebildet. In der eigentlichen Tabelle ist natürlich keine Funktion abgebildet, sondern es ist in einigen oder allen Zeilen 1 bis m der ersten Spalte 1 ein Ampütudenwert dieser Echofunktion abgelegt, der bei der dem jeweiligen Zeilenindex 1 bis m entsprechenden Laufzeit auftritt. Dies gilt für alle anderen Spalten 2 bis n der Tabelle analog.

Die Echofunktion beginnt mit einem Abklingen des Sendesignals S. Daran schließt sich unmittelbar das an der Füllgutoberfläche reflektierte Echo L an. Etwa in der Mitte der ersten Spalte 1 der Tabelle tritt das Echo S des Störers 9 auf und in den letzten Zeilen (m, m-1 ..) tritt das Echo B des Bodens 15 auf.

In der letzten Spalte n der Tabelle ist eine Echofunktion einzutragen, wie sie bei leerem Behälter 3 entsteht. In Fig. 3 ist diese Echofunktion unter Spalte n als Funktion abgebildet. Die Echofunktion beginnt mit dem Abklingen des Sendesignals S. Darauf folgt ungefähr in der Mitte der Tabelle das Echo S des Störers 9 auf das in einigem Abstand das Echo B des Bodens 15 folgt. Ein an der Füllgutoberfläche reflektiertes Echo L tritt in dieser Echofunktion nicht auf, da der Behälter 3 leer ist.

Vergleicht man die Laufzeiten tS und tB der Echos S und B des Störers 9 und des Bodens 15, so fällt auf, daß beide Echos S und B in Spalte n nach kürzeren Laufzeiten tS, tB auftreten, als in Spalte 1. Ursache hierfür ist, daß die Sendesignale S bzw. deren Echosignale E bei vollem Behälter 3 weite Strecken durch das Füllgut 1 hindurch zurücklegen müssen, während sie sich bei leerem Behälter 3 durch den freien Raum ausbreiten. Dieser Unterschied ist auf die Ausbreitungsgeschwindigkeit von Mikrowellen zurückzuführen, die im Füllgut 1 geringer ist, als im freien Raum.

Neben den beiden äußeren Spalten 1 und n sind in Fig. 3 noch weitere Spalten 2, 3 und 4 dargestellt.

Die Spalte 2 entspricht einem Füllstand, der zwischen dem höchsten Füllstand bei vollem Behälter 3 und dem Störer 9 liegt. Die Spalte 3 entspricht einem Füllstand, bei dem der Störer 9 gerade noch vom Füllgut 1 überdeckt ist und die Spalte 4 einem Füllstand, bei dem der Störer 9 nicht mehr vom Füllgut überdeckt ist.

Anhand von Fig. 3 sind einige grundsätzliche Strukturen erkennbar.

Das Echo B vom Boden 15 weist in Spalte 1 seine größte Laufzeit tB, in Spalte n seine geringste Laufzeit tB auf. Von Spalte 1 bis n nimmt die Laufzeit tB dieses Echos B kontinuierlich ab.

Das Echo L von der Reflektion an der Füllgutoberfläche weist in Spalte 1 seine geringste Laufzeit tL, in Spalte n seine größte Laufzeit tL auf. Von Spalte 1 bis n steigt die Laufzeit tL dieses Echos L kontinuierlich an.

Das Echo S vom Störer 9 weist in Spalte 1 seine größte Laufzeit auf. Danach nimmt die Lauftzeit tS kontinuierlich mit abfallendem Füllstand ab, bis der Füllstand sich auf gleicher Höhe mit dem Störer 9 befindet Abfallender Füllstand ist gleichbedeutend mit ansteigendem Spaltenindex. Hat der Füllstand einmal die Höhe des Störers 9 unterschritten ändert sich die Laufzeit tS des Echos S vom Störer 9 mit weiter abfallendem Füllstand bzw. weiter ansteigendem Spaltenindex nicht mehr. Die Laufzeit tS des Störers 9 ist in Spalte 4 gleich der in Spalte n. In Spalte 1 ist sie größer als in Spalte 2 in Spalte 2 größer als in Spalte 3 und in Spalte 3 größer als in spalte 4.

Selbstverständlich brauchen in der Tabelle nicht sämtliche in einem Echosignal enthaltene Informationen im Detail wiedergespiegeit zu sein. Die in der Tabelle abgelegten Echofunktionen können vielmehr stark vereinfachte Abbilder der Echosignale sein. Dabei bietet es sich an Daten in größerem Umfang zu komprimieren und möglichst nur essentiele Informationen aufzunehmen. Es ist auch denkbar, in der Tabelle Echofunktionen abzulegen, die nur die Amplituden und die Laufzeiten der Maxima der in einem Echosignal auftretenden Echos enthalten. Man kann sogar Echofunktionen verwenden die nur die Laufzeiten der Maxima enthalten. Die Tabelle enthält in diesem Fall sehr viele freie Felder und benötigt entsprechend weniger Speicherplatz. Genauso muß nicht jedes noch so kleine Echo aufgezeichnet werden. Es können z.B. Schwellwerte für eine Mindestamplitude festgelegt werden, die ein Echo mindestens aufweisen muß, um überhaupt eingang in die Tabelle zu finden.

Die Daten der Tabelle werden vor Ort von und mit der beschriebenen Anordnung erstellt und abgelegt. Hierzu sind verschiedene Verfahren einsetzbar.

Ein mögliches Verfahren zur Generierung der Tabelle besteht darin, daß zu Beginn einmal der aktuelle Füllstand vorgegeben wird. Dieser kann z.B. durch eine Zusatzmessung mit einem anderen Meßgerät oder durch ein Anfahren eines markanten Füllstandes, wie z.B. voll oder leer, ermittelt werden.

Anhand dieses vorgegebenen bekannten Füllstandes wird ein an einer Füllgutoberfläche reflektiertes Echo eines Echosignals oder der zugehörigen Echofunktion identifiziert.

Dieses einmal als Füllstandsecho erkannte Echo wird über einen Zeitraum verfolgt. Ändert sich nun der Füllstand, so ist durch die Echoverfolgung das Füllstandsecho bekannt. Aus dessen Laufzeit tL ergibt sich dann jeweils der zugehörige Füllstand.

Während dieses Zeitraums werden periodisch Sendesignale S ausgesendet. Die Echosignale E der Sendesignale S werden aufgenommen und aus den Echosignalen E werden Echofunktionen gebildet.

Diese Echosfunktionen werden in der Tabelle jeweils in einer Spalte abgelegt, deren Spaltenindex dem zu diesem Zeitpunkt durch die Verfolgung des Füllstandsechos bestimmten Füllstand entspricht.
Es gibt jedoch eine Reihe von Anwendungen, bei denen es nicht möglich oder sehr teuer ist, einmal einen aktuellen Füllstand vorzugeben.

In diesen Fällen ist ein Verfahren zu bevorzugen, daß ohne vorgegebenen Füllstand in der Lage ist, die Tabelle aufzuzeichnen.

Ein solches Verfahren ist nachfolgend beschrieben. Dabei wird zu Beginn ein Sendesignal S ausgesendet und dessen Echosignal E aufgenommen. Aus dem Echosignal E eine Echofunktion abgeleitet und es wird ein wahrscheinlich von einer Reflektion an der Füllgutoberfläche stammendes Nutzecho bestimmt. Die Bestimmung des Nutzechos kann dabei genauso erfolgen, wie dies bei herkömmlichen Füllstandsmeßgeräten geschieht. Es kann z.B. wie eingangs beschrieben das Maximum mit der größten Amplitude ausgewählt werden, es kann aber auch das Nutzecho unter Berücksichtigung einer Form der Echos und/oder Laufzeitvorgaben und/oder Amplitudenvorgaben ausgewählt werden.

Dieses einmal ausgewählte Nutzecho wird über einen Zeitraum verfolgt. Genau wie bei dem zuvor beschriebenen Verfahren werden während dieses Zeitraums periodisch Sendesignale S ausgesendet, deren Echosignale E aufgenommen und aus den Echosignalen E Echofunktionen bestimmt.

Die Echofunktionen werden in der Tabelle jeweils in einer Spalte unter einem Spaltenindex abgelegt, der einem zu diesem Zeitpunkt durch die Verfolgung des Nutzechos bestimmten Füllstand entspricht.

Vorzugsweise wird anschließend eine Plausibilitäts-betrachtung der Tabelle vorgenommen. Das Ergebnis der Plausibilitätsbetrachtung besteht darin, daß sie das Nutzecho als an der Füllgutoberfläche reflektiertes Echo bestätigt oder widerlegt.

Eine besonders gute Form der Plausibilitätsbetrachtung beruht darauf, in der Tabelle Höhenlinien zu erkennen, die einer Veränderung einer Laufzeit dieses Echos in Abhängigkeit vom Spaltenindex, der hier für den Füllstand steht, entsprechen. Dabei werden bespielsweise in allen Spalten die Maxima der Echofunktionen ermittelt und beginnend beipsielsweise mit Spalte 1 als Ausgangsspalte untersucht ob, in der benachbarten Spalte in unmittelbarer Nähe der Maxima der Ausgangsspalte ebenfalls Maxima liegen. Ist dies der Fall, werden die benachbarten Maxima durch ein Höhenliniensegment verbunden. Auf diese Weise werden alle Spalten durchlaufen und die benachbarten Höhenliniensegmente zu Höhenlinien zusammen gefaßt.

Anhand der Höhenlinien ist erkennbar, ob das gewählte Nutzecho tatsächlich das richtige Nutzecho ist, also auf Reflektionen an der Füllgutoberfläche zurück zu führen ist.

Zum besseren Verständnis werden nachfolgend charakteristische Verläufe von Höhenlinien diskutiert, wie sie auftreten, wenn das Nutzecho tatsächlich das richtige Nutzecho ist, und wenn nicht.

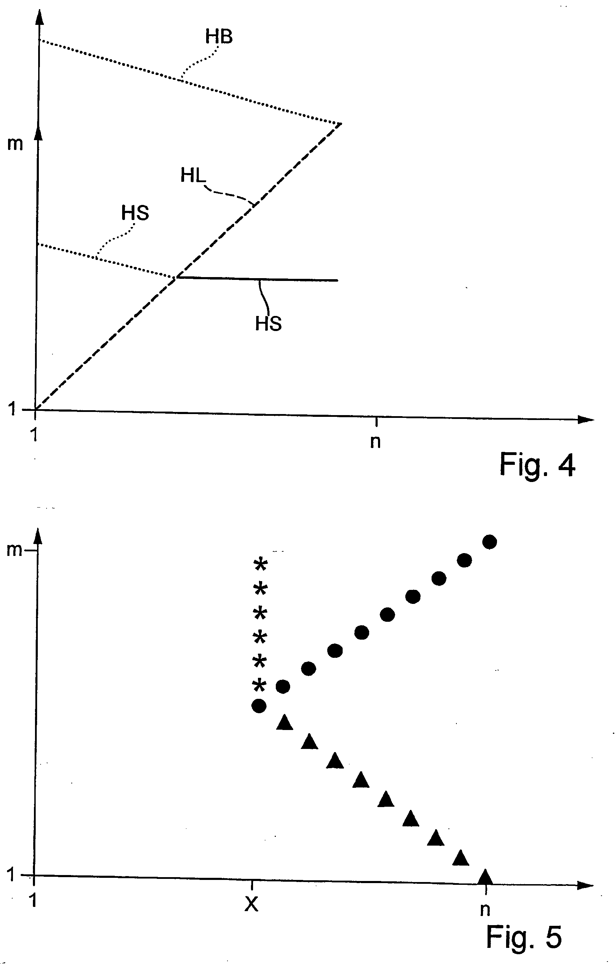

Bei der in Fig. 3 veranschaulichten Tabelle wurde in allen Spalten das richtige an der Füllgutoberfläche reflektierte Echo eingesetzt. In Fig. 3 sind auf die zuvor beschriebene Weise gewonne Höhenlinien eingezeichnet. Es sind drei ausgeprägte Höhenlinien HL, HB, HS zu erkennen. Die Höhenlinie HL stammt von an der Füllgutoberfläche reflektierten Echos und steigt streng monoton. Die Höhenlinie HB ist dem Boden 15 zuzuordnen und fällt streng monoton ab. Die Höhenlinie HS ist Reflektionen am Störer 9 zuzuordnen und schneidet die Höhenlinie HL. In Fig. 4 sind die Höhenlinien in einem zweidimensionalen Diagramm dargestellt.

Wird ein Echo als Nutzecho ausgewählt, das nicht von einer Reflektion an der Füllgutoberfläche her rührt, sondern vom Störer 9, so entsteht ein ganz anderes Bild. In Fig. 5 ist ein Beispiel für Höhenlinien dargestellt, die in einem solchen Fall auftreten.

Zur Veranschaulichung kann man sich den leeren Behälter 3 vorstellen, der sich langsam füllt. Bei leerem Behälter 3 werden das Nutzecho und das Echo B des Bodens 15 aufgezeichnet. Da das Nutzecho als Füllstandsecho interpretiert wird, wird in der Tabelle an der der Lauftzeit tx des Nutzechos bei leerem Behälter entsprechenden Spalte X die zugehörige Echofunktion eingetragen.

Steigt der Füllstand langsam an, so taucht in den Echofunktionen nebem dem Nutzecho ein Füllstandsecho auf, daß sich dem Nutzecho mit ansteigendem Füllstand nähert. Diese Füllstandsechos bewegen sich in der Tabelle in Spalte X vertikaler Richtung auf das Nutzecho zu. Dies ist in Fig. 5 durch Sternchen angedeutet.

Steigt der Füllstand weiter an und übersteigt die Höhe des Störers, so steigt die Laufzeit des Nutzechos an. Die verlängerte Laufzeit ist dabei auf die geringere Ausbreitungsgeschwindigkeit der Sende- und Empfangssignale S, E im Füllgut zurück zu führen. Da das Nutzecho als vom Füllgut reflektiertes Echo interpretiert wird, obwohl es tatsächlich das Echo des Störers 9 ist, werden die entsprechenden Echofunktionen auch hier entsprechend der Laufzeit des Nutzechos in der Tabelle abgelegt. Folglich wandert das Nutzecho in Fig. 5 entlang der Diagonalen nach oben. Dies ist als gepunktete Linie eingezeichnet.

Zeitgleich nimmt natürlich die Laufzeit des vom Füllgut reflektierten Echos immer weiter ab. Dieses Echo wandert entsprechen in Fig. 5 nach rechts unten ab. Je größer die Laufzeit des Nutzechos ist, umso geringer ist die des vom Füllgut reflektierten Echos. Dies ist durch Dreiecke dargestellt.

Aus diesen Betrachtungen läßt sich die Verallgemeinerung ableiten, daß immer dann, wenn ein Höhenlinienabschnitt aus der Tabelle hervorgeht, in dem die Laufzeiten mit ansteigendem Füllstand abfallen, obwohl die zum Höhenlinienabschnitt zugehörige Echoquelle vermeindlich nicht vom Füllgut überdeckt ist, das Nutzecho nicht auf eine Reflektion am Füllgut zurück geht.

Die Echoquelle ist nicht vom Füllgut überdeckt, wenn die Laufzeiten des Höhenlinienabschnitts in einer Spalte geringer sind, als die Laufzeit des Nutzechos in der selben Spalte. Dies heißt, daß der Höhenlinienabschnitt in dem in Fig. 5 dargestellten Diagramm unterhalb der Diagonalen liegt.

Bei der gewählten Darstellung, in der Spalten- und Zeilenindex mit ansteigender Laufzeit ansteigen bedeutet dies, das ein Auftreten von Höhenlinienabschnitten mit negativer Steigung unterhalb der Diagonalen gleichbedeutend damit ist, daß das Nutzecho falsch ausgewählt wurde.

Bei der Plausibilitätsbetrachtung werden daher vorzugsweise die Höhenlinien ermittelt. Anschließend wird überprüft, ob ein Höhenlinienabschnitt vorliegt, in dem die Laufzeiten mit ansteigendem Füllstand abfallen und in dem die Laufzeiten in einer Spalte geringer sind, als die Laufzeit des Nutzechos in der selben Spalte.

Wenn ein solcher Höhenlinienabschnitt nicht vorliegt wird das Nutzecho als an der Füllgutoberfläche reflektiertes Echo akzeptiert.

Wenn ein solcher Höhenlinienabschnitt jedoch vorliegt wird das Nutzecho als an der Füllgutoberfläche reflektiertes Echo widerlegt wird.

Wenn die Plausibilitätsbetrachtung ergibt, daß das Nutzecho nicht von einer Reflektion an der Füllgutoberfläche stammt, wird vorzugsweise mittels der Tabelle der momentane Füllstand gefunden. Anschließend wird das gesamte Verfahren wiederholt, wobei als Nutzecho, dasjenige Echo ausgewählt wird, das einem mittels der Tabelle bestimmten momentanen Füllstand entspricht.

Bei der Bestimmung des momentanen Füllstandes anhand der Tabelle wird die Erkenntnis ausgenutzt, daß die Höhenlinie, die mit ansteigender Laufzeit abfällt und gleichzeitig in ein und derselben Spalte kürzere Laufzeiten aufweist als das Nutzecho, auf Echos zurückzuführen ist, die an der Füllgutoberfläche reflektiert wurden.

Der aktuelle Füllstand läßt sich somit aus der Tabelle ermitteln, indem ein Sendesignal S ausgesendet wird, dessen Echosignal E aufgezeichnet wird, aus letzterem die zugehörige Echofunktion abgeleitet wird, und diese mit den Echofunktionen der Tabelle verglichen wird. Es wird durch den Vergleich diejenige Echofunktion ermittelt, die der aktuell aufgezeichneten Echofunktion am nächsten kommt. Liegt die ermittelte Echofunktion in einer Spalte, in der auch ein Segement des abfallenden Höhenlinienabschnitts liegt, so ergibt sich aus der Laufzeit des Segments unmittelbar der akutelle Füllstand. In dem in Fig. 5 dargestellten Beispiel wäre das der Fall, wenn der Spaltenindex der ermittelten Spalte größer als x ist.

Ist der Spaltenindex gleich x, so gibt es zwei Möglichkeiten. Läßt sich aus den Echos der akutellen Echofunktion unter Ausschluß des Nutzechos eindeutig ein Füllstandsecho identifizieren, so ergibt sich daraus der aktuelle Füllstand, ist dies nicht der Fall, können solange weitere Sendesignale S ausgesendet, deren Echosignale E aufgenommen und deren zugehörige Echofunktionen mit denen der Tabelle verglichen werden, bis der Vergleich der aktuellen Echofunktion mit den Echofunktionen der Tabelle eine Echofunktion ergibt, deren Spaltenindex größer als x ist. Für den Betreiber bedeutet dies, daß er abwarten muß, bis der Füllstand die Höhe der Störers, auf den das bisherige Nutzecho zurück zu führen ist, übersteigt.

Alternativ kann natürlich ein Echo der aktuellen Echofunktion, das natürlich nicht gleich dem bisherigen Nutzecho ist, als wahrscheinliches Nutzecho ausgewählt werden. Das gesamte Verfahren wird dann mit diesem wahrscheinlichen Nutzecho wiederholt.

Neben dem zuvor beschriebenen Verfahren zur Speicherung der behälterspezifischen Daten in der Tabelle sind andere Verfahren einsetzbar.

Ein vorteilhaftes Verfahren besteht darin, ein Sendesignal S auszusenden, dessen Echosignal aufzunehmen, und aus dem Echosignal mehrere Echos auszuwählen. In dem in Fig. 2 dargestellten übersichtlichen Echosignal E würden z.B. die Echos L, S und B ausgewählt werden.

Alle ausgewählten Echos, hier L, S und B, werden über einen Zeitraum verfolgt und es wird eins dieser Echos als wahrscheinlich von einer Reflektion an der Füllgutoberfläche stammendes Nutzecho bestimmt.

Um das Verständnis zu erleichtern wird hier auf das in den Figuren 2 und 3 dargestellte Beispiel zurückgegriffen. Es wird zur Erläuterung des Prinzips der Einfachheit halber ein Fall durchlaufen, bei dem sich der anfänglich volle Behälter 3 während des Zeitraums vollständig entleert.

In diesem Zeitraum, in dem die Echos verfolgt werden, werden periodisch Sendesignale S ausgesendet und deren Echosignale E aufgenommen. Für jedes Echosignal E werden die Laufzeiten der ausgewählten Echos ermittelt.

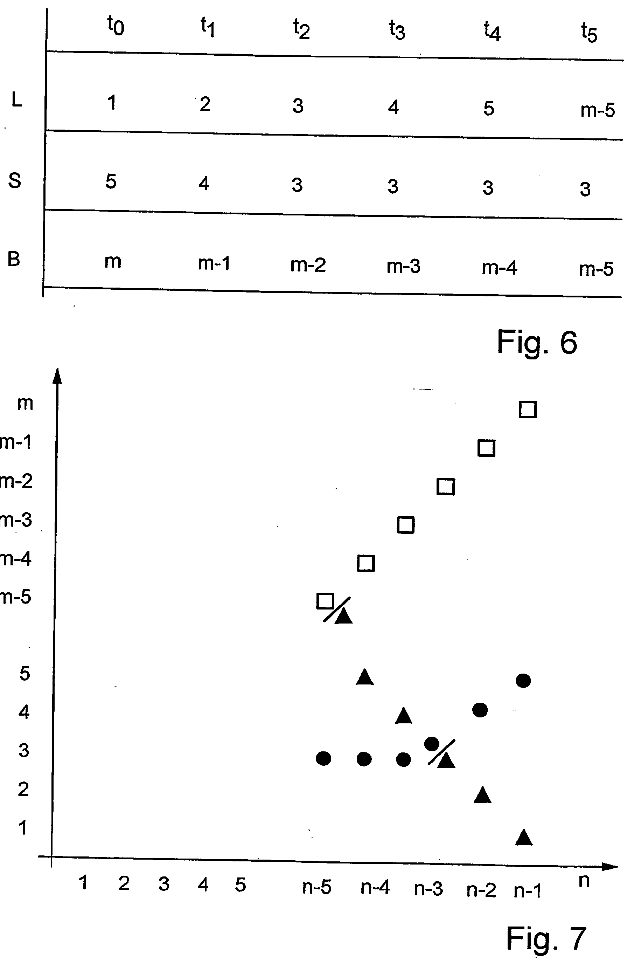

Es wird bei vollem Behälter 3 zur Zeit t0 mit der Aufzeichnung der Tabelle begonnen und während des Zeitraums zu den Zeiten t0 bis t5 Echosignale E aufgezeichnet. Selbstverständlich werden in der Regel sehr viel mehr, z.B. einige hundert, Echosignale E ausgewertet werden. Die Beschränkung auf t0 bis t5 dient hier nur der besseren Übersicht. Es wird zu jedem der Zeitpunkte t0 bis t5 die Lage der ausgewählten Echos L, S, B bestimmt. Fig. 6 zeigt eine Übersicht, in der die Lage der Echos L, S, B zu den Zeiten t0 bis t5 eingetragen sind. Die Lage der Echos L, S, B ist durch deren Laufzeit gegeben, die wiederum einer Entfernung von der Antenne 11 entspricht und unmittelbar einem Zeilenindex zugeordnet werden kann. Entsprechend sind in Fig. 6 direkt die Zeilenindizes eingetragen.

Wird nun eins der Echos L, S, B als von der Füllgutoberfläche stammendes Nutzecho identifiziert, so kann unmittelbar aus der Übersicht die Tabelle erstellt werden.

Dabei wird für jedes Echosignal E der dem Nutzecho zuzuordnende wahrscheinliche Füllstand bestimmt. Dieser entspricht in unserem Beispiel dem in der ersten Zeile der Übersicht unter L eingetragenen Zeilenindex.

Anschließend wird die diesem wahrscheinlichen Füllstand entsprechende Spalte ermittelt. Der Spaltenindex dieser Spalte ist gleich dem unter L eingetragenen Zeilenindex.

In dieser Spalte wird dann jeweils für jedes der ausgewählten Echos L, S, B in einer der Laufzeit des jeweiligen Echos L, S, B entsprechenden Zeile ein Wert abgelegt. Der Zeilenindex dieser Zeilen ist gleich dem in der Übersicht an der entsprechenden Stelle eingetragenen Zeilenindex. Der einzutragende Wert ist im einfachsten Fall eine Konstante, die lediglich anzeigt, daß an der entsprechenden Stelle ein Maximum vorliegt. Es kann aber stattdessen hier auch die jeweilige Amplitude der Echos L, S, B eingetragen werden. Alle übrigen Felder der Tabelle bleiben frei. Dies bietet den Vorteil, daß die Tabelle nur einen sehr geringen Speicherplatzbedarf aufweist.

Ausgehend von der in Fig. 6 dargestellten Übersicht kommt man zu einer der Fig. 4 entsprechenden Tabelle, wenn man richtiger Weise das Echo L als Nutzecho erkennt.

Hält man versehentlich das Echo S für das Nutzecho, so gelangt man zu einer Tabelle, wie sie in Fig. 5 abgebildet ist. Hält man versehentlich das Echo B für das Nutzecho, so gelangt man zu einer Tabelle, wie sie in Fig. 7 abgebildet ist.

Genau wie bei dem zuvor beschriebenen Verfahren, wird auch hier wieder vorzugsweise eine Plausibilitätsbetrachtung der Tabelle vorgenommen, deren Ergebnis das Nutzecho als an der Füllgutoberfläche reflektiertes Echo bestätigt oder widerlegt. Bei der Plausibilitätsbetrachtung kann genauso vorgangen werden, wie bei dem zuvor beschriebenen Verfahren. Wie man an den Figuren 4, 5 und 7 sieht, zeigt eine Untersuchung der Höhenlinienabschnitte, daß einzig bei Fig. 4 das richtige Nutzecho ausgewählt wurde. In den Figuren 5 und 7 liegt dagegen jeweils ein Höhenliniensegment vor, in dem die Laufzeiten mit ansteigendem Füllstand abfallen und in dem die Laufzeiten in einer Spalte geringer sind, als die Laufzeit des Nutzechos in der selben Spalte. Daraus folgt unmittelbar, daß hier das falsche Echo als Nutzecho herangezogen wurde. Genau wie bei dem zuvor beschriebenen Verfahren kann mittels der mit dem falschen Nutzecho aufgezeichneten Tabelle das richtige Nutzecho bestimmt werden.

Das zuletzt genannte Verfahren bietet dabei den Vorteil, daß es nicht vollständig wiederholt werden muß. Es genügt, wenn aus der Übersicht von Fig. 6 in Kenntnis des nachträglich aus der Tabelle ermittelten richtigen Nutzechos eine neue Tabelle aufgestellt wird.

Ein weiterer Vorteil des letztgenannten Verfahrens besteht darin, daß die Höhenliniensegmente in der Tabelle auf sehr einfache Weise und insb. ohne aufwendige Algorithmen erkennbar sind.

Außerdem können fehlende Daten der Tabelle durch Extrapolation ermittelt und in der Tabelle abgelegt werden.

Das zuletzt beschriebene Verfahren kann selbstverständlich auch in abgewandelter und/oder vereinfachtet Form angewendet werden.

Ein solches Verfahren besteht z.B. darin, ein Sendesignal S auszusenden, dessen Echosignal E aufzunehmen, aus dem Echosignal mehrere Echos auszuwählen und diese ausgewählten Echos über einen Zeitraum zu verfolgen. Es wird, genau wie bei dem zuvor beschriebenen Verfahren eins dieser Echos als wahrscheinlich von einer Reflektion an der Füllgutoberfläche stammendes Nutzecho bestimmt. Ebenso werden während des Zeitraums periodisch Sendesignale S ausgesendet, deren Echosignale E aufgenommen werden. Für jedes Echosignal E wird die Laufzeit der ausgewählten Echos ermittelt wird und für jedes Echosignal E der dem Nutzecho zuzuordnende wahrscheinliche Füllstand bestimmt.

Anschließend wird bei diesem Verfahren, die diesem wahrscheinlichen Füllstand entsprechende Spalte ermittelt, und in dieser Spalte für jedes der ausgewählten Echos in einer dem jeweiligen Echo entsprechenden Zeile ein Wert abgelegt. Die so gewonnene Tabelle entspricht im wesentlichen der in Fig. 6 dargestellten Übersicht. Dort ist für jedes Echos L, S, B eine eigene Zeile vorgesehen und in den Zeilen sind die Laufzeiten der Echos L, S, B abgelegt. Da bei der Erstellung der Übersicht von Fig. 6 ein sich stetig entleerender Behälter 3 zugrunde gelegt wurde, sind die Spalten der Übersicht bereits in der richtigen Reihenfolge angeordnet. Wäre dies nicht der Fall, so erhält man die gewünschte Reihenfolge unmittelbar, indem man die Spalten nach den in der Zeile des Nutzechos eingetragenen Laufzeiten sortiert.

Die so gewonnene Tabelle enthält, abgesehen von der hier irrelevanten Zuordnung zu den Zeiten zu denen die Echosignale E aufgezeichnet wurden, alle Informationen, die auch bei dem zuvor beschriebenen Verfahren vorlagen. Entsprechend kann anhand der Tabelle genau wie bei dem zuvor beschriebenen Verfahren eine Plausibiltätsbetrachtung vorgenommen werden, deren Ergebnis das Nutzecho als an der Füllgutoberfläche reflektiertes Echo bestätigt oder wiederlegt.

Ebenso können auch bei diesem Verfahren fehlende Daten durch Extrapolation ermittelt werden.

Ist die Tabelle einmal erstellt und abgelegt, können mit dem Füllstandsmeßgerät jederzeit, also auch nach längeren Meßpausen, Füllstandsmessungen sofort nach dem Einschalten des Füllstandmeßgeräts vom Gerät eigenständig und insb. ohne die Vorgabe eines aktuellen Füllstandes oder eine andere Initialisierungsprozedur zuverlässige Füllstandsmessungen ausgeführt werden.

Hierzu weist das Füllstandsmeßgerät 5 eine Auswerteeinheit 19 auf, die zur Bestimmung des Füllstandes Zugriff auf die im Speicher 17 abgelegte Tabelle hat.

Bei der Füllstandsmessung wird ein Sendesignal S ausgesendet, dessen Echosignal E aufgenommen, und aus dem Echosignal E eine aktuelle Echofunktion abgeleitet.

Zur Bestimmung des Füllstandes wird ein Vergleich der aktuellen Echofunktion mit den in der Tabelle abgelegten Echofunktionen vorgenommen, aus dem dann der aktuelle Füllstand abgeleitet wird.

Dies geschieht, in dem durch den Vergleich diejenige in der Tabelle abgelegte Echofunktion ermittelt wird, die die größte Übereinstimmung mit der aktuellen Echofunktion aufweist. Der aktuelle Füllstand wird dann gleich dem dem Spaltenindex der ermittelten Echofunktion zugeordneten Füllstand gesetzt.

Bei einer ersten Inbetriebnahme arbeitet ein erfindungsgemäßes Füllstandsmeßgerät 5 genauso genau und zuverlässig wie herkömmliche Füllstandsmeßgeräte. Es ist aber, anders als herkömmliche Füllstandsmeßgeräte, in der Lage selbsttätig zu lernen. Durch die Aufstellung der Tabelle versetzt sich das Füllstandsmeßgerät ohne äußere Hilfe und ohne zusätzlichen Kosten- und/oder Zeitaufwand in die Lage, Meßfehler zu erkennen.

Auch bedarf es nach einer längeren Meßpause oder einer vollständigen Unterbrechung der Messungen keiner neuen Inbetriebnahme. Das Füllstandsmeßgerät 5 arbeitet nach einer Wiederinbetreibnahme auf Grund der Daten in der Tabelle sofort mit einer sehr hohen Zuverlässigkeit. Es kann auch in schwierigen Fällen anhand des erfindungsgemäßen Verfahrens eindeutig dasjenige Echo erkennen, daß von einer Reflektion an der Füllgutoberfläche herrührt.

## Patentansprüche

1. Füllstandsmeßgerät (5) zur Messung eines Füllstandes eines Füllgutes (1) in einem Behälter (3) mit
- mindestens einer Antenne (11) zum Senden von Sendesignalen (S) und zum Empfangen von Echosignalen (E),
- einer Signalverarbeitung (13), die dazu dient aus den empfangenen Echosignalen (E) eine Echofunktion abzuleiten, die Amplituden (A) des Echosignals (E) in Abhängigkeit von deren Laufzeit enthält,
- einem Speicher (17), in dem behälterspezifische Daten in einer Tabelle gespeichert sind,
- wobei die Spalten der Tabelle mit einem Spaltenindex zur Aufnahme jeweils einer Echofunktion dienen,
- wobei die Echofunktionen in den Spalten in einer Reihenfolge abgelegt sind, so dass die in der Tabelle in der Spalte mit dem Spaltenindex abgelegte Echofunktion einem bestimmten Füllstand entspricht, und
- einer Auswerteeinheit (19), die so ausgebildet ist, dass
- sie zur Bestimmung des aktuellen Füllstandes auf die Tabelle zugreift und die in der Tabelle abgelegte Echofunktionen mit der aktuellen Echofunktion vergleicht, in dem diejenige in der Tabelle abgelegte Echofunktion ermittelt wird, die die größte Übereinstimmung mit der aktuellen Echofunktion aufweist, und der aktuelle Füllstand dem dem Spaltenindex der ermittelten Echofunktion zugeordneten Füllstand gleichgesetzt wird.

2. Füllstandsmeßgerät (5) nach Anspruch 1, bei dem die Daten Im Speicher (17) in komprimierter Form abgelegt sind.

3. Verfahren zur Messung eines Füllstands eines Füllgutes (1) in einem Behälter (3) mit einem
Füllstandsmeßgerät (5) mit
- mindestens einer Antenne (11), die Sendesignale (S) sendet und Echosignale (E) empfängt,
- einer Signalverarbeitung (13), die aus den empfangenen Echosignalen (E) eine Echofunktion ableitet, die die Amplituden (A) des Echosignals (E) in Abhängigkeit von deren Laufzeit enthält,
- einem Speicher (17), in dem behälterspezifische Daten in einer Tabelle gespeichert werden,
- wobei die Spalten der Tabelle mit einem Spaltenindex zur Aufnahme jeweils einer Echofunktion dienen,
- wobei die Echofunktionen in den Spalten in einer Reihenfolge so abgelegt werden, dass die in der Tabelle in der Spalte mit dem Spaltenindex abgelegte Echofunktion einem bestimmten Füllstand entspricht,
und
- einer Auswerteeinheit (19), die
-- zur Bestimmung des aktuellen Füllstandes auf die Tabelle zugreift, die in der Tabelle abgelegte Echofunktionen mit der aktuellen Echofunktion vergleicht, in dem diejenige in der Tabelle abgelegte Echofunktion ermittelt wird, die die größte Übereinstimmung mit der aktuellen Echofunktion aufweist, und die den Füllstand dem dem Spaltenindex der ermittelten Echofunktion zugeordneten Füllstand gleichsetzt.

4. Verfahren nach Anspruch 3, bei dem
- ein an einer Füllgutoberfläche reflektiertes Echo als Füllstandsecho durch einen vorgegebenen Füllstand identifiziert wird,
- dieses Echo über einen Zeitraum verfolgt wird,
- während dieses Zeitraums periodisch Sendesignale (S) ausgesendet werden, deren Echosignale (E) aufgenommen werden und aus den Echosignalen (E) Echofunktionen gebildet werden,
- die in der Tabelle in einer Spalte mit einem Spaltenindex abgelegt wird, der einem zu diesem Zeitpunkt durch die Verfolgung des Füllstandsechos bestimmten Füllstand entspricht.

5. Verfahren nach Anspruch 3, bei dem
- ein Sendesignal (S) ausgesendet wird, dessen Echosignal (E) aufgenommen wird und aus dem Echosignal (E) eine Echofunktion abgeleitet wird,
- ein wahrscheinlich von einer Reflektion an der Füllgutoberfläche stammendes Nutzecho bestimmt wird,
- dieses Nutzecho über einen Zeitraum verfolgt wird,
- während dieses Zeitraums periodisch Sendesignale (S) ausgesendet werden, deren Echosignale (E) aufgenommen werden und aus den Echosignalen (E) Echofunktionen bestimmt werden,
- die in der Tabelle in einer Spalte unter einem Spaltenindex abgelegt werden, der der einem zu diesem Zeitpunkt durch die Verfolgung des Nutzechos bestimmten Füllstand entspricht.

6. Verfahren nach Anspruch 5, bei dem eine Plausibilitätsbetrachtung der Tabelle vorgenommen wird, deren Ergebnis das Nutzecho als an der Füllgutoberfläche reflektiertes Echo bestätigt oder widerlegt.

7. Verfahren zur Füllstandsmessung nach Anspruch 6, bei
dem
- mittels der Tabelle der momentane Füllstand gefunden wird, wenn die Plausibilitätsbetrachtung ergibt, daß das Nutzecho nicht von einer Reflektion an der Füllgutoberfläche stammt, und
- das gesamte Verfahren wiederholt wird,
- wobei als Nutzecho, dasjenige Echo ausgewählt wird, das dem mittels der Tabelle bestimmten momentanen Füllstand entspricht.

8. Verfahren nach Anspruch 3, bei
dem
- bei der Plausibilitätsbetrachtung in der Tabelle Höhenlinien erkannt werden, die einer Veränderung einer Laufzeit dieses Echos in Abhängigkeit vom Füllstand entsprechen,
- überprüft wird, ob ein Höhenlinienabschnitt vorliegt,
-- in dem die Laufzeiten mit ansteigendem Füllstand abfallen und
- in dem die Laufzeiten in einer Spalte geringer sind, als die Laufzeit des Nutzechos in derselben Spalte,
- das Nutzecho als an der Füllgutoberfläche reflektiertes Echo widerlegt wird, wenn ein solcher Höhenlinienabschnitt vorliegt,
- das Nutzecho als an der Füllgutoberfläche reflektiertes Echo akzeptiert wird, wenn ein solcher Höhenlinienabschnitt nicht vorliegt.

9. Verfahren nach Anspruch 7 und 8,
bei dem
- mittels der Tabelle der momentane Füllstand gefunden wird, wenn die Plausibilitätsbetrachtung ergibt, daß das Nutzecho nicht von einer Reflektion an der Füllgutoberfläche stammt, und
- das gesamte Verfahren wiederholt wird,
- wobei als Nutzecho, dasjenige Echo ausgewählt wird, das dem mittels der Tabelle bestimmten momentanen Füllstand entspricht.

10. Verfahren nach Anspruch 3. bei dem
- ein Sendesignal (S) ausgesendet wird, dessen Echosignal (E) aufgenommen wird,
- aus dem Echosignal (E) mehrere Echos ausgewählt werden,
- eins dieser Echos als wahrscheinlich von einer Reflektion an der Füllgutoberfläche stammendes Nutzecho bestimmt wird,
- während des Zeitraums periodisch Sendesignale (S) ausgesendet werden, deren Echosignale (E) aufgenommen werden, und
- für jedes Echosignal (E) die Laufzeit der ausgewählten Echos ermittelt wird und
- für jedes Echosignal (E) der dem Nutzecho zuzuordnende wahrscheinlichen Füllstand bestimmt wird,
- die diesem wahrscheinlichen Füllstand entsprechende Spalte ermittelt wird, und
- in dieser Spalte für jedes der ausgewählten Echos in einer der Laufzeit des jeweiligen Echos entsprechenden Zeile ein Wert abgelegt wird.

11. Verfahren nach Anspruch 3, bei dem
- ein Sendesignal (S) ausgesendet wird, dessen Echosignal (E) aufgenommen wird,
- aus dem Echosignal (E) mehrere Echos ausgewählt werden,
- eins dieser Echos als wahrscheinlich von einer Reflektion an der Füllgutoberfläche stammendes Nutzecho bestimmt wird,
- während des Zeitraums periodisch Sendesignale (S) ausgesendet werden, deren Echosignale (E) aufgenommen werden, und
- für jedes Echosignal (E) die Laufzeit der ausgewählten Echos ermittelt wird und
- für jedes Echosignal (E) der dem Nutzecho zuzuordnende wahrscheinliche Füllstand bestimmt wird,
- die diesem wahrscheinlichen Füllstand entsprechende Spalte ermittelt wird, und
- in dieser Spalte für jedes der ausgewählten Echos in einer dem jeweiligen Echo entsprechenden Zeile ein Wert abgelegt wird.

12. Verfahren nach Anspruch 10 oder 11, bei dem eine Plausibilitätsbetrachtung der Tabelle vorgenommen wird, deren Ergebnis das Nutzecho als an der Füllgutoberfläche reflektiertes Echo bestätigt oder widerlegt.

13. Verfahren nach einem der Ansprüche 3-12,
bei dem in der Tabelle fehlende Daten durch Extrapolation ermittelt und in der Tabelle abgelegt werden.

## Claims

1. Level transmitter (5) for measuring a level of a product (1) in a vessel (3) with
- at least one antenna (11) for transmitting transmission signals (S) and receiving echo signals (E),
- a signal processing module (13), which is used to derive an echo function from the echo signals received (E), said echo function containing the amplitudes (A) of the echo signal (E) as a function of their time of flight,
- a memory (17) in which vessel-specific data are saved in a table,
-- wherein the columns of the table with a column index are used to record one echo function each,
-- wherein the echo functions are saved in the columns in an order such that the echo function saved in the table in the column with the column index corresponds to a determined level,
and
- an evaluation unit (19) which is designed in such a way that
-- it accesses the table to determine the current level and compares the echo functions saved in the table with the current echo function in such a way that it determines the echo function in the table which best matches the current echo function and sets the current level to equal the level assigned to the column index of the echo function determined.

2. Level transmitter (5) as claimed in Claim 1, wherein the data in the memory (17) are saved in a compressed manner.

3. Procedure for measuring a level of a product (1) in a vessel (3) with a level transmitter (5) with
- at least one antenna (11) that transmits transmission signals (S) and receives echo signals (E),
- a signal processing module (13), which derives an echo function from the echo signals received (E), said echo function containing the amplitudes (A) of the echo signal (E) as a function of their time of flight,
- a memory (17) in which vessel-specific data are saved in a table,
-- wherein the columns of the table with a column index are used to record one echo function each,
-- wherein the echo functions are saved in the columns in an order such that the echo function saved in the table in the column with the column index corresponds to a determined level,
and
- an evaluation unit (19) which
- accesses the table to determine the current level, compares the echo functions saved in the table with the current echo function in such a way that it determines the echo function in the table which best matches the current echo function, and sets the level to equal the level assigned to the column index of the echo function determined.

4. Procedure as claimed in Claim 3, wherein
- an echo reflected at a product surface is identified as a level echo by a predefined level,
- this echo is tracked over a period of time,
- during this time, transmission signals (S) are periodically transmitted whose echo signals (E) are recorded and echo functions are formed from these echo signals (E),
- said echo functions being saved in the table in a column with a column index which corresponds to a level determined at this time by tracking the level echo.

5. Procedure as claimed in Claim 3, wherein
- a transmission signal (S) is transmitted whose echo signal (E) is recorded and an echo function is derived from the echo signal (E),
- a useful echo probably coming from the reflection at the product surface is determined,
- this useful echo is tracked over a period of time,
- during this time, transmission signals (S) are transmitted periodically whose echo signals (E) are recorded and echo functions are determined from the echo signals (E),
- said echo functions being saved in the table in a column under a column index which corresponds to a level determined at this time by tracking the useful echo.

6. Procedure as claimed in Claim 5, wherein a plausibility check is performed on the table the result of which confirms or refutes the useful echo as an echo reflected at the product surface.

7. Procedure for measuring level as claimed in Claim 6, wherein
- the current level is found using the table if the plausibility check reveals that the useful echo does not come from a reflection at the product surface, and
- the entire procedure is repeated,
- wherein the echo that corresponds to the current level determined using the table is selected as the useful echo.

8. Procedure as claimed in Claim 3, wherein
- during the plausibility check level curves are identified in the table that correspond to a change in a time of flight of this echo depending on the level,
- a check is performed to check the presence of a level curve segment,
- in which the times of flight decrease with increasing level and
- in which the times of flight in a column are less than the time of flight of the useful echo in the same column,
- the useful echo is refuted as an echo reflected at the product surface if such a level curve segment exists,
- the useful echo is accepted as an echo reflected at the product surface if such a level curve segment does not exist.

9. Procedure as claimed in Claim 7 and 8, wherein
- the current level is found using the table if the plausibility check reveals that the useful echo does not come from a reflection at the product surface, and
- the entire procedure is repeated,
- wherein the echo that corresponds to the current level determined using the table is selected as the useful echo.

10. Procedure as claimed in Claim 3, wherein
- a transmission signal (S) is transmitted whose echo signal (E) is recorded,
- several echoes are selected from the echo signal (E),
- one of these echoes is determined as a useful echo probably coming from a reflection at the product surface,
- during the time, transmission signals (S) are periodically transmitted whose echo signals (E) are recorded, and
- the time of flight of the selected echo is determined for every echo signal (E), and
- the probable level which can be assigned to the useful echo is determined for every echo signal (E),
- the column that corresponds to this probable level is determined, and
- a value is saved in this column for each of the selected echoes in a line corresponding to the time of flight of the respective echo.

11. Procedure as claimed in Claim 3, wherein
- a transmission signal (S) is transmitted whose echo signal (E) is recorded,
- several echoes are selected from the echo signal (E),
- one of these echoes is determined as a useful echo probably coming from a reflection at the product surface,
- during the time, transmission signals (S) are periodically transmitted whose echo signals (E) are recorded, and
- the time of flight of the selected echo is determined for every echo signal (E), and
- the probable level which can be assigned to the useful echo is determined for every echo signal (E),
- the column that corresponds to this probable level is determined, and
- a value is saved in this column for each of the selected echoes in a line corresponding to the respective echo.

12. Procedure as claimed in Claim 10 or 11, wherein a plausibility check is performed on the table the result of which confirms or refutes the useful echo as an echo reflected at the product surface.

13. Procedure as claimed in one of the Claims 3 to 12, wherein data missing from the table are determined by extrapolation and saved in the table.

## Revendications

1. Transmetteur de niveau (5) destiné à la mesure d'un niveau de remplissage d'un produit (1) dans un réservoir (3) avec
- au moins une antenne (11) pour l'émission de signaux d'émission (S) et pour la réception de signaux d'écho (E),
- un module de traitement de signal (13), qui sert à déduire à partir des signaux d'écho (E) reçus une fonction d'écho, qui contient les amplitudes (A) du signal d'écho (E) en fonction de leur temps de propagation,
- une mémoire (17), dans laquelle sont mémorisées dans un tableau des données spécifiques au réservoir,
- les colonnes du tableau dotées d'un indice de colonne servant chacune à l'insertion d'une fonction d'écho,
-- les fonctions d'écho étant enregistrées dans les colonnes selon un ordre tel que la fonction d'écho enregistrée dans le tableau, dans la colonne dotée de l'indice de colonne, correspond à un niveau déterminé, et
- une unité d'exploitation (19), qui est conçue de telle sorte
- à accéder au tableau pour la détermination du niveau actuel et à comparer les fonctions d'écho enregistrées dans le tableau avec la fonction d'écho actuelle, en ce qu'est déterminée la fonction d'écho enregistrée dans le tableau, qui présente la plus grande concordance avec la fonction d'écho actuelle, et de telle sorte que le niveau actuel se voit affecter le niveau attribué à l'indice de colonne de la fonction d'écho déterminée.

2. Transmetteur de niveau (5) selon la revendication 1, pour lequel les données de la mémoire (17) sont enregistrées de façon compressée.

3. Procédé destiné à la mesure d'un niveau d'un produit (1) dans un réservoir (3) avec un
transmetteur de niveau (5) avec
- au moins une antenne (11), qui émet des signaux d'émission (S) et reçoit des signaux d'écho (E),
- un module de traitement de signal (13), qui déduit à partir des signaux d'écho (E) reçus une fonction d'écho, qui contient les amplitudes (A) du signal d'écho (E) en fonction de leur temps de propagation,
- une mémoire (17), dans laquelle sont mémorisées dans un tableau des données spécifiques au réservoir,
- les colonnes du tableau dotées d'un indice de colonne servant chacune à l'insertion d'une fonction d'écho,
- les fonctions d'écho étant enregistrées dans les colonnes selon un ordre tel que la fonction d'écho enregistrée dans le tableau, dans la colonne dotée de l'indice de colonne, correspond à un niveau déterminé,
et
- une unité d'exploitation (19), qui
-- accède au tableau pour la détermination du niveau actuel, compare les fonctions d'écho enregistrées dans le tableau avec la fonction d'écho actuelle, en ce qu'est déterminée la fonction d'écho enregistrée dans le tableau, qui présente la plus grande concordance avec la fonction d'écho actuelle, et qui affecte au niveau actuel le niveau attribué à l'indice de colonne de la fonction d'écho déterminée.

4. Procédé selon la revendication 3, pour lequel
- un écho réfléchi à une surface du produit est identifié en tant qu'écho de niveau par un niveau prédéfini,
- cet écho est suivi pendant une période de temps,
- sont émis, pendant cette période de temps, des signaux d'émission (S) périodiques, dont les signaux d'écho (E) sont enregistrés, et pour lequel sont formées, à partir des signaux d'écho (E), des fonctions d'écho,
- qui sont enregistrées dans le tableau, dans une colonne dotée d'un indice de colonne, qui correspond à un niveau déterminé à cet instant par le suivi de l'écho de niveau.

5. Procédé selon la revendication 3, pour lequel
- est émis un signal d'émission (S), dont le signal d'écho (E) est enregistré, et une courbe d'écho est déduite du signal d'écho (E),
- est déterminé un écho utile provenant vraisemblablement d'une réflexion à la surface du produit,
- cet écho utile est suivi pendant une période de temps,
- sont émis, pendant cette période de temps, des signaux d'émission (S) périodiques, dont les signaux d'écho (E) sont enregistrés, et pour lequel sont déterminées, à partir des signaux d'écho (E), des fonctions d'écho,
- qui sont enregistrées dans le tableau, dans une colonne dotée d'un indice de colonne, qui correspond à un niveau déterminé à cet instant par le suivi de l'écho utile.

6. Procédé selon la revendication 5, pour lequel est effectué un contrôle de plausibilité du tableau, dont le résultat confirme ou infirme l'écho utile en tant qu'écho réfléchi à la surface du produit.

7. Procédé destiné à la mesure de niveau selon la revendication 6, pour lequel
- est trouvé au moyen du tableau le niveau momentané, lorsqu'il résulte du contrôle de plausibilité le fait que l'écho utile ne provient pas d'une réflexion à la surface du produit, et
- le procédé complet est répété,
- est sélectionné, en tant qu'écho utile, l'écho correspondant au niveau momentané déterminé au moyen du tableau.

8. Procédé selon la revendication 3, pour lequel
- sont reconnues dans le tableau, lors du contrôle de plausibilité, des lignes de hauteur, qui correspondent à une modification d'un temps de propagation de cet écho en fonction du niveau,
- est contrôlé la présence d'un segment de hauteur de ligne,
- dans lequel les temps de propagation décroissent à mesure que le niveau augmente et
- dans lequel les temps de propagation dans une colonne sont inférieurs au temps de propagation de l'écho utile dans la même colonne,
- l'écho utile est refusé en tant qu'écho réfléchi à la surface du produit en cas de présence d'un tel segment de hauteur de ligne,
- l'écho utile est accepté en tant qu'écho réfléchi à la surface du produit en cas d'absence d'un tel segment de hauteur de ligne.

9. Procédé selon la revendication 7 ou 8, pour lequel
- est trouvé au moyen du tableau le niveau momentané, lorsqu'il résulte du contrôle de plausibilité le fait que l'écho utile ne provient pas d'une réflexion à la surface du produit, et
- le procédé complet est répété,
- est sélectionné, en tant qu'écho utile, l'écho correspondant au niveau momentané déterminé au moyen du tableau.

10. Procédé selon la revendication 3, pour lequel
- est émis un signal d'émission (S), dont le signal d'écho (E) est enregistré,
- plusieurs échos sont sélectionnés à partir du signal d'écho (E),
- l'un de ces échos est déterminé comme écho utile provenant vraisemblablement d'une réflexion à la surface du produit,
- sont émis, pendant la période de temps, des signaux d'émission (S) périodiques, dont les signaux d'écho (E) sont enregistrés, et
- est déterminé, pour chaque signal d'écho (E), le temps de propagation de l'écho sélectionné et
- est déterminé, pour chaque signal d'écho (E), le niveau vraisemblable attribué à l'écho utile,
- est déterminée la colonne qui correspond à ce niveau vraisemblable, et
- est enregistrée, dans cette colonne pour chacun des échos sélectionnés, une valeur dans une ligne correspondant au temps de propagation de l'écho respectif.

11. Procédé selon la revendication 3, pour lequel
- est émis un signal d'émission (S), dont le signal d'écho (E) est enregistré,
- plusieurs échos sont sélectionnés à partir du signal d'écho (E),
- l'un de ces échos est déterminé comme écho utile provenant vraisemblablement d'une réflexion à la surface du produit,
- sont émis, pendant la période de temps, des signaux d'émission (S) périodiques, dont les signaux d'écho (E) sont enregistrés, et
- est déterminé, pour chaque signal d'écho (E), le temps de propagation de l'écho sélectionné et
- est déterminé, pour chaque signal d'écho (E), le niveau vraisemblable attribué à l'écho utile,
- est déterminée la colonne qui correspond à ce niveau vraisemblable, et
- est enregistrée, dans cette colonne pour chacun des échos sélectionnés, une valeur dans une ligne correspondant à l'écho respectif.

12. Procédé selon la revendication 10 ou 11, pour lequel est effectué un contrôle de plausibilité du tableau, dont le résultat confirme ou infirme l'écho utile en tant qu'écho réfléchi à la surface du produit.

13. Procédé selon la revendication 3 à 12, pour lequel les données manquant dans le tableau sont déterminées par extrapolation et enregistrées dans le tableau.
